# EUROPEAN PATENT APPLICATION

(11) **EP 2 405 368 A1**
(43) Date of publication of application: **11.01.2012**
(21) Application number: 11170220.5
(22) Date of filing: 16.06.2011
(51) Int. Cl.: G06F 17/30

(54) **Information processing apparatus, information processing method, and program**

(30) Priority: 23.06.2010 JP 2010142461
(71) Applicant: Sony Corporation, Tokyo 108-0075 (JP)
(72) Inventor: Nishibe, Mitsuru, Minato-ku, Tokyo 108-0075 (JP); Kawasaki, Koichi, Minato-ku, Tokyo 108-0075 (JP); Ishikawa, Tsuyoshi, Minato-ku, Tokyo 108-0075 (JP); Hisanaga, Kenji, Minato-ku, Tokyo 108-0075 (JP)
(74) Representative: Jackson, Jonathan Andrew

(57) **Abstract**

An apparatus and method provide logic for formatting electronic content. In one implementation, an apparatus includes a generation unit configured to generate a signal for displaying content to a user on a display screen, and a receiving unit configured to receive information associated with a selection by the user of the displayed content. An identification unit is configured to identify a content element corresponding to the displayed content selection, based on at least the received information, and a formatting unit configured to format the identified content element by applying a formatting structure to the identified content element. The generation unit generates a signal for displaying the formatted content element on the display screen.

## Description

This application is based upon and claims the benefit of priority from Japanese Patent Application JP 2010-142461, filed June 23, 2010.

The disclosed exemplary embodiments relate to an information processing apparatus, an information processing method, and a program. Particularly, the disclosed exemplary embodiments relate to an information processing apparatus, an information processing method, and a program that are used for enlarging text or the like.

Personal computers, mobile phone apparatuses, terminals for reading electronic books, and smart phones are widely used. In many cases, these terminals have a function of connecting to a network and enable a user to browse a web page existing on the network. For example, when a web page is displayed on a relatively small screen, such as the screen of a mobile phone apparatus or the like, the user may have difficulty in reading the page because characters may be too small.

In the case of viewing content intended for a terminal having a large screen by using a terminal having a small screen, the user may be inconvenienced by having to enlarge the content to read small characters, by being incapable of viewing the entire content after enlargement, and by having to perform frequent scrolling to read through the content. Also, in the case of a touch-panel terminal, sufficient enlargement is necessary for correctly specifying a target element.

Technologies that have been suggested for addressing these problems will be described. First, there is a technology called "smart-fit rendering". In smart-fit rendering, the layout of content is changed in accordance with the width of a terminal (e.g., see Japanese Patent Application Publication No. 2007-509402). In smart-fit rendering, content can be browsed by simply performing vertical scrolling, without frequent switching between vertical scrolling and horizontal scrolling. Furthermore, the size of characters can be changed to a certain size for easy reading and easy operation if necessary.

Also, a technology of performing temporal enlargement in units of blocks is suggested. According to this suggestion, an entire layout can be viewed more easily, and a desired block can be found more easily. Furthermore, since the layout is not changed, an enlargement function that can be easily loaded and that can be easily handled by a user can be provided.

Also suggested is a technology of limiting the width of a block (more specifically, the width of sentences in a block) in accordance with the width of a terminal when an enlarged layout is executed. With this method, individual sentences can be read without horizontal scrolling while preventing a significant change in the layout.

Also suggested is a technology of using different display areas for an entire layout and detailed display. According to this suggestion, enlargement is realized by having a state of selecting a block from an entire layout and a state of operating the state of the block (e.g., see Japanese Patent Application Publication No. 2008-276801). According to this suggestion, the visibility and operability of a block can be improved while still allowing easy viewing of the entire layout.

According to smart-fit rendering, blocks lose the original layout meaning and are arranged in a one-dimensional manner, and thus it may be difficult to find a desired block. Also, an operation of skipping to the block of desired text may be a burden of the user.

In the case of performing temporal enlargement in units of blocks, the enlargement ratio changes depending on a block width, and thus insufficient enlargement may be performed depending on a block width. In such a case, further enlargement is necessary and also horizontal scrolling is necessary for reading through the content, which increases the burden of the user.

In the case of limiting the width of a block in accordance with the width of a terminal, the width of the block is limited when enlargement is performed, and thus a large blank may be formed between the block and an adjacent block, so that it may take time to perform scrolling. Also, it is necessary to perform change of the entire layout as well as change of the enlargement ratio, which increases the amount of processing. As a result, it may take time to present an enlarged screen to the user.

In the case of using different display areas for an entire layout and detailed display, an operation method may vary depending on a display state, which may confuse the user. Also, since content is handled in units of blocks, operations for movement between blocks increase, which may decrease usability.

Accordingly, it is desirable to realize enlargement for easy reading and prevent a decrease in usability due to the enlargement.

Consistent with an exemplary embodiment, an information processing apparatus includes a generation unit configured to generate a signal for displaying content to a user on a display screen. The displayed content is associated with an electronic file comprising a plurality of content elements. The apparatus also includes a receiving unit configured to receive information associated with a selection by the user of the displayed content, and an identification unit configured to identify a content element corresponding to the displayed content selection, based on at least the received information. A formatting unit is configured to format the identified content element by applying a formatting structure to the identified content element, and the generation unit is further configured to generate a signal for displaying the formatted content element on the display screen.

Consistent with an additional exemplary embodiment, a computer-implemented method formats electronic content. The method includes generating a signal for displaying content to a user on a display screen. The displayed content is associated with an electronic file comprising a plurality of content elements. The method includes receiving information associated with a selection by the user of the displayed content, and identifying, using a processor, a content element corresponding to the displayed content selection, based on at least the received information. The method includes formatting the identified content element by applying formatting structure to the identified content element, and a signal is generated for displaying the formatted content element on the display screen.

Consistent with a further exemplary embodiment, a non-transitory, computer-readable storage medium stores a program that, when executed by a processor, causes the processor to perform a method for formatting electronic content. The method includes generating a signal for displaying content to a user on a display screen. The displayed content is associated with an electronic file comprising a plurality of content elements. The method includes receiving information associated with a selection by the user of the displayed content, and identifying, using a processor, a content element corresponding to the displayed content selection, based on at least the received information. The method includes formatting the identified content element by applying formatting structure to the identified content element, and a signal is generated for displaying the formatted content element on the display screen.

According to the disclosed exemplary embodiments, content can be enlarged.

Various respective aspects and features of the invention are defined in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:
Fig. 1 is a diagram illustrating an example of a screen displayed on a display;
Fig. 2 is a diagram illustrating an example of a screen displayed on a display;
Fig. 3 is a diagram illustrating an example of a screen displayed on a display;
Fig. 4 is a diagram illustrating an example of a screen displayed on a display;
Fig. 5 is a diagram illustrating an example of a screen displayed on a display;
Fig. 6 is a diagram for describing a tree structure of content;
Fig. 7 is a diagram illustrating the configuration of a terminal according to a disclosed exemplary embodiment;
Fig. 8 is a diagram for describing state transition in the terminal;
Fig. 9 is a diagram for describing the functions of the terminal;
Fig. 10 is a flowchart for describing a process performed by the terminal;
Fig. 11 is a flowchart for describing a process performed by the terminal;
Fig. 12 is a flowchart for describing a process performed by the terminal;
Fig. 13 is a flowchart for describing a process performed by the terminal; and
Fig. 14 is a flowchart for describing a process performed by the terminal.

Hereinafter, exemplary embodiments will be described with reference to the drawings.

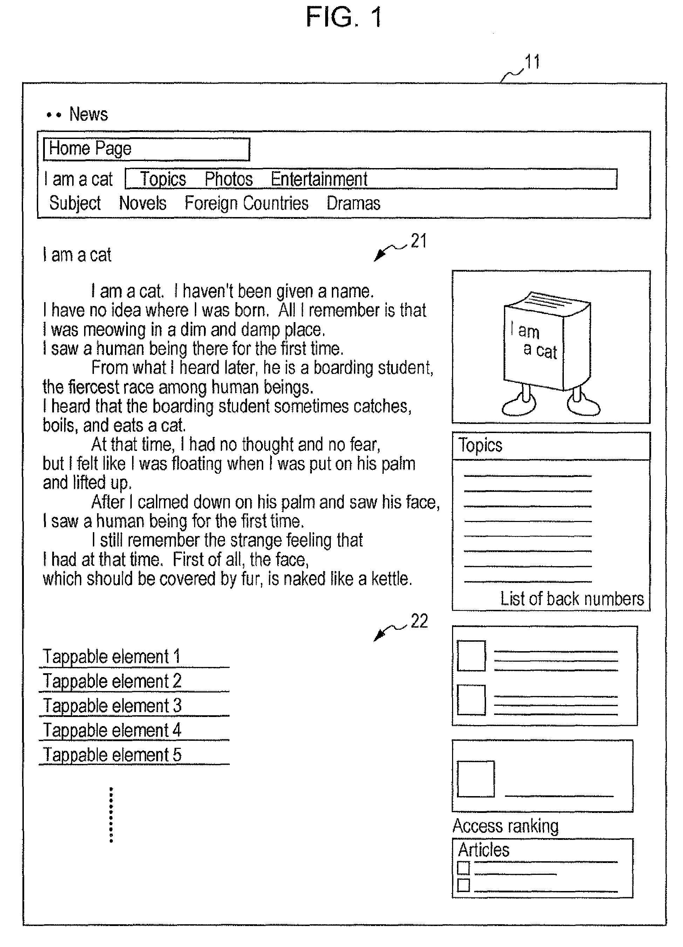

In an exemplary embodiment, a display of a web page, for example, in a certain terminal, may be enlarged. The enlargement can be performed while preventing deformation of a page layout and a complicated operation for browsing content, such as operation of a scroll bar. In order to clarify such superiority of the disclosed exemplary embodiments, in comparison to the enlargement according to the related art, and for easy understanding of the disclosed exemplary embodiments, a description will be given with comparison of the enlargement according to the related art and the enlargement according to an exemplary embodiment described below in reference to Figs. 1 to 5.

Fig. 1 is a diagram illustrating an example of a state where a certain web page is displayed on a display 11. On the left side of the display 11 illustrated in Fig. 1, areas 21 and 22 where text is mainly displayed are provided. On the right side of the display 11, an area for displaying an image and text of an advertisement or the like is provided.

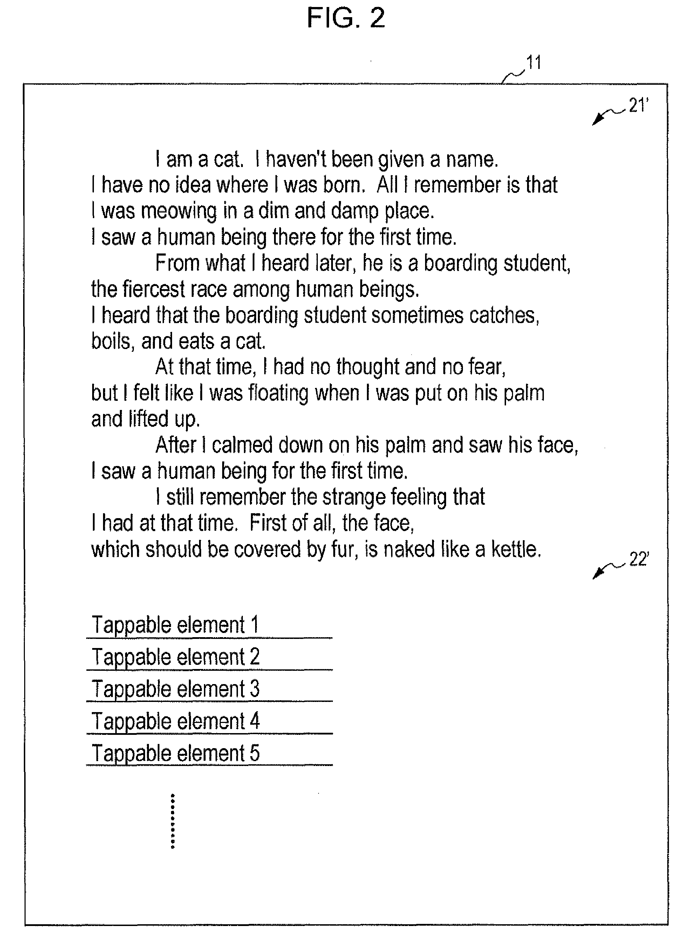

A user who is browsing such a web page provides an instruction to perform enlargement if he/she feels that characters in the entire content are small, particularly if he/she wants to read the text (article) displayed in the area 21 and has difficulty in reading small characters. In response to the instruction, a control unit (not illustrated) that controls display on the display 11 performs an enlargement process, and accordingly the screen on the display 11 is switched to a screen of an enlarged image illustrated in Fig. 2.

The contents that had been displayed in the areas 21 and 22 are enlarged and displayed on the display 11 illustrated in Fig. 2. The areas after the enlargement are denoted by numerals with a dash. The contents that had been displayed in the areas 21 and 22 are enlarged and displayed in areas 21' and 22' on the display 11 illustrated in Fig. 2.

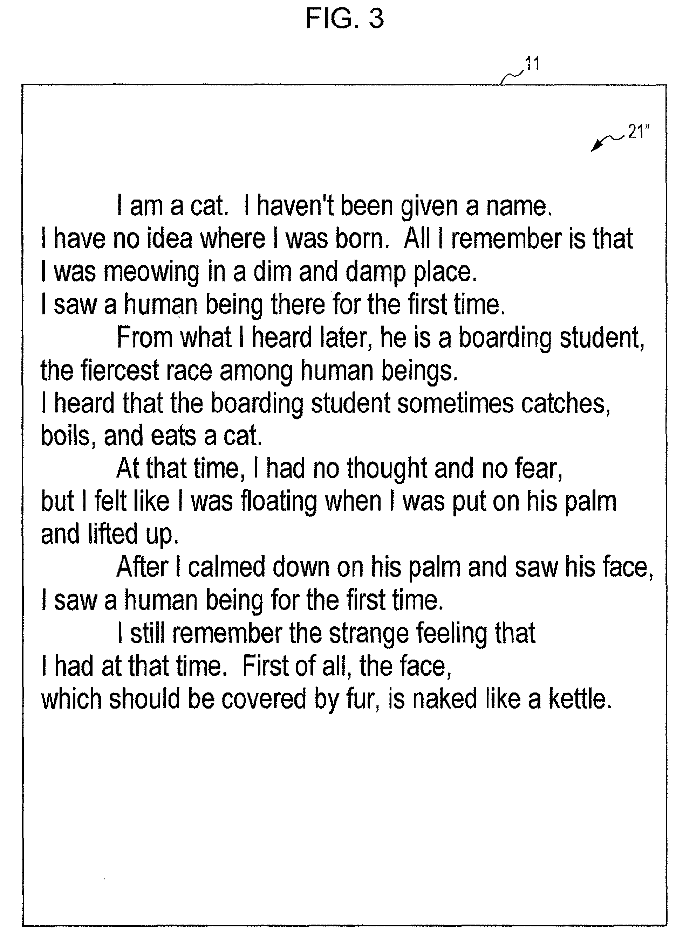

This enlargement is a result of temporal enlargement performed in units of blocks. In such enlargement, there is no significant change in the entire layout when the screen illustrated in Fig. 1 is compared with the screen illustrated in Fig. 2. Thus, the user can read desired content while viewing the entire layout. However, even in the case of the screen illustrated in Fig. 2, the user may feel difficulty in reading small characters. In that case, a further enlargement instruction is provided. As a result, the screen on the display 11 is switched to the screen illustrated in Fig. 3.

The screen illustrated in Fig. 3 is a screen obtained by enlarging the content in the area 21'. The content in the area 21 (area 21') is enlarged and displayed in the area 21" on the screen illustrated in Fig. 3, with a character size that the user can easily read.

In this way, it may be necessary for the user to repeatedly provide an instruction to perform an enlargement process in order to realize desired enlargement. In this embodiment, a process is performed in the manner described below, and thus the screen illustrated in Fig. 1 can be switched to the screen illustrated in Fig. 3 if an enlargement instruction is provided from the user. Accordingly, the number of times an instruction is provided from the user can be minimized.

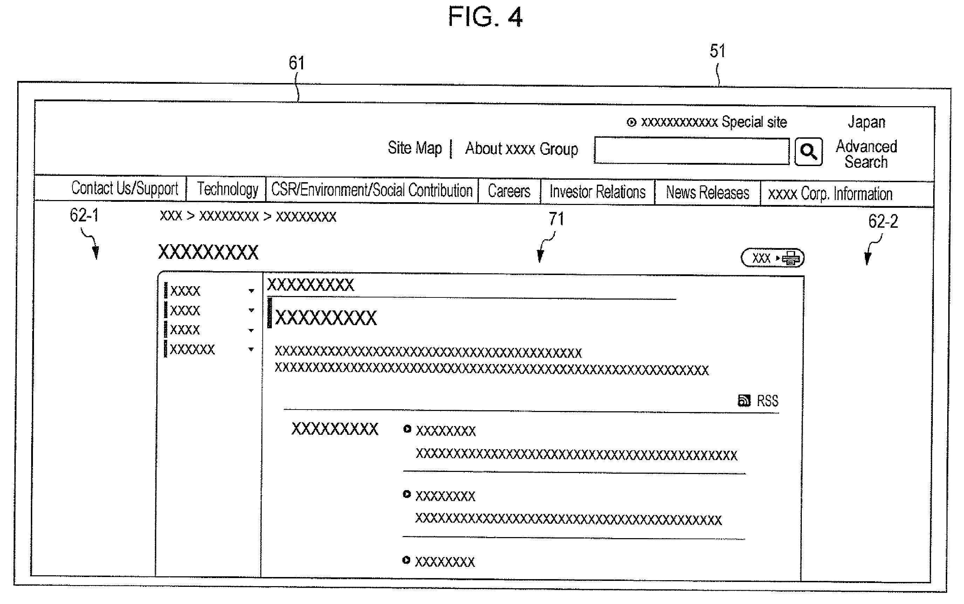

Fig. 4 illustrates another exemplary display. A display 51 illustrated in Fig. 4 is a display of a terminal, such as a personal computer, and is a display having a relatively large display area. In the case of the display 51, a web page is displayed in a center area 61 of the screen, for example, but nothing is displayed in areas 62-1 and 62-2 at both ends. Some web pages do not make the most of a large display area as on the display 51 and may have an unused area.

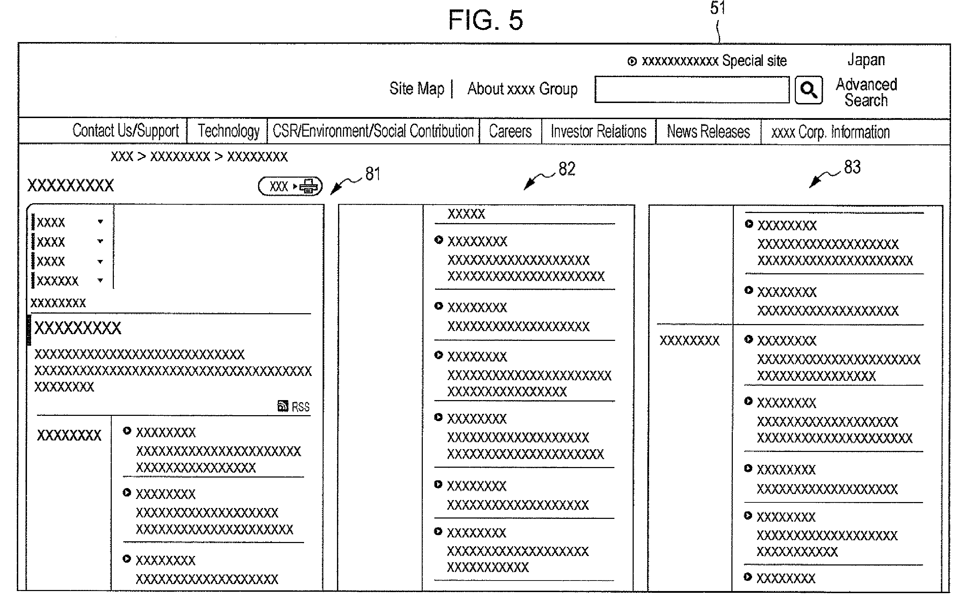

In order to effectively use such an unused area, the screen illustrated in Fig. 5 is caused to be displayed. On the screen illustrated in Fig. 5, the content displayed in an area 71 at the center of the web page on the screen illustrated in Fig. 4 is displayed in an area 81 on the left of the display 51. In this case, the area 71 where the content is displayed is the area to be enlarged (re-laid out) in response to an instruction from the user.

Hidden content that is not displayed on one screen exists in the area 71 (Fig. 4) that is to be enlarged in response to an instruction from the user, and the hidden content is displayed in areas 82 and 83 (Fig. 5) in response to an enlargement instruction. That is, in Fig. 5, the content continued from the content displayed in the area 81 is displayed in the area 82, and the content continued from the content displayed in the area 82 is displayed in the area 83.

On the screen illustrated in Fig. 4, the user can view only the content displayed in the area 71. If the user wants to view further content, it is necessary for him/her to perform an operation, such as scrolling. However, if display is performed in the manner illustrated in Fig. 5, the user can continuously view the content without performing an operation, such as scrolling. In this way, enlargement can be realized by applying the exemplary embodiments described below.

### Structure of content

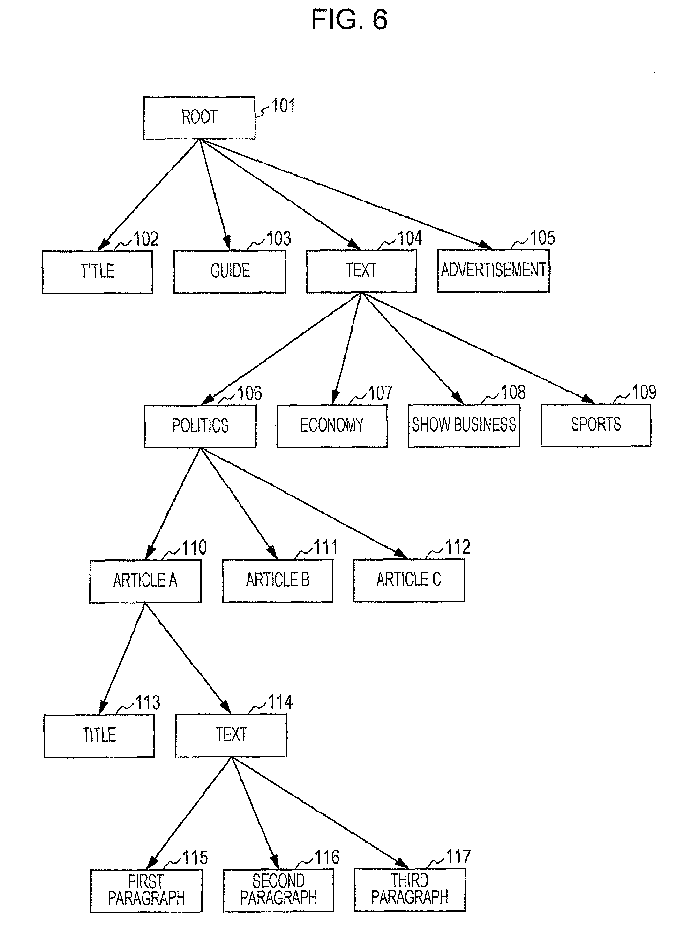

In this embodiment, enlargement is performed in the manner illustrated in Fig. 3 or Fig. 5 when an instruction to perform enlargement is provided. Now, the data structure of content that is to be enlarged in this manner will be described. In other words, the process regarding enlargement described below produces a greater effect by being applied to the content having the data structure illustrated in Fig. 6.

The content (sentences) has a sentence format represented by a tree structure. A greater effect can be produced by applying an exemplary embodiment to the content in which the form of displaying the sentence format can be specified (style can be changed). A specific example includes content made up of HyperText Markup Language (HTML) that represents sentences in a tree structure and a cascading style sheet (CCS) that specifies a display method.

Referring to Fig. 6, the content illustrated in Fig. 6 has a tree structure, which includes a first layer, a second layer, a third layer, a fourth layer, a fifth layer, and a sixth layer in order from the top in the figure. The first layer includes an element 101, which is data regarding "root" information serving as a root of the tree structure. The second layer includes an element 102, which is data regarding "title", an element 103, which is data regarding "guide", an element 104, which is data regarding "text", and an element 105, which is data regarding "advertisement".

The element 104 included in the second layer has an element 106 including an article regarding "politics", an element 107 including an article regarding "economy", an element 108 including an article regarding "show business", and an element 109 including an article regarding "sports" in the lower third layer.

If the article regarding "politics" includes three articles, the fourth layer under the element 106 includes an element 110 "article A", an element 111 "article B", and an element 112 "article C". "Article A" is made up of a title and text, and thus the fifth layer under the element 110 includes an element 113, which is data regarding "title", and an element 114, which is data regarding "text".

Furthermore, "text" is made up of a plurality of paragraphs. The sixth layer under the element 114, which is data regarding "text", includes an element 115, which is data regarding "first paragraph", an element 116, which is data regarding "second paragraph", and an element 117, which is data regarding "third paragraph".

Although not illustrated, regarding a style, for example, the style of the element 113, which is data regarding "title", is set so that characters are displayed with a size of eighteen points. Also, the style of the elements 115 to 117, which are data regarding "first paragraph", "second paragraph", and "third paragraph", respectively, is set so that characters are displayed with a size of fourteen points.

If the content having a data structure of such a tree structure is displayed, the screen illustrated in Fig. 1 is provided to the user, for example. For example, if the display 11 is a display for a personal computer and has a relatively large display area and if the content having the tree structure illustrated in Fig. 6 is content created for such a personal computer, relatively appropriate display is performed.

However, if such content is displayed in a terminal that has a relatively small display area, such as a mobile terminal, without changing the style intended for the personal computer, the display in the mobile terminal is difficult to read.

That is, a sentence format and a style are formed by assuming the screen size of a terminal or the like to some extent. Thus, if the sentence format and the style are given to a terminal having a configuration not intended thereto, content is not correctly displayed or is displayed in a difficult-to-understand manner, or operation is difficult to perform. In a browser, for example, if a site created for a personal computer is viewed in a compact mobile phone, the entire site is not displayed on the screen and the user may have difficulty in reading it, or the site is reduced in accordance with the screen size and the user may have difficulty in reading it.

Such inconvenience can be overcome by generating a style suitable for the terminal, without using an incompatible style. However, it is difficult to generate a style that can be applied to a present terminal without causing any failure from an original style. This has already been described above with reference to Figs. 1 to 5.

In the case of performing an enlargement process on content having the tree structure illustrated in Fig. 6, if the enlargement process is performed on the entire content, the above-described inconvenience may occur, which is not favorable. For this reason, an enlargement process may be locally performed. For example, if an instruction to enlarge the article based on the element 110 "article A" in the content having the tree structure illustrated in Fig. 6 is provided, an enlargement process is performed on the elements associated with the element 110.

That is, in this case, the elements associated with the element 110 are the elements 113 to 117, and thus an enlargement process is performed on the elements 113 to 117. In a method according to the related art, an enlargement process is also performed on the elements other than the elements 113 to 117, and thus inconvenience of difficulty in reading occurs as described above. However, by locally applying a style suitable for the terminal, the occurrence of such inconvenience can be prevented.

### Terminal

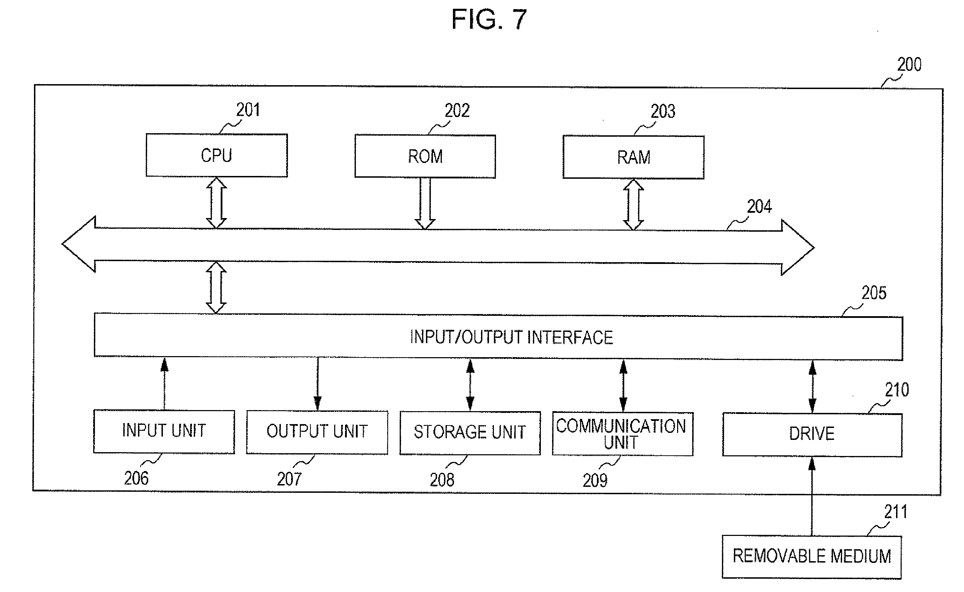

The enlargement process will be further described. First, a terminal for realizing such enlarged display will be described with reference to Fig. 7. The terminal to which an exemplary embodiment is applied includes a terminal such as a personal computer, a mobile phone apparatus, a terminal for reading electronic books, and a smart phone. Here, a personal computer is used as an example and a description is continued.

Fig. 7 is a diagram illustrating a configuration of a terminal according to a disclosed exemplary embodiment. A terminal 200 has a configuration in which a central processing unit (CPU) 201, a read only memory (ROM) 202, and a random access memory (RAM) 203 are mutually connected through a bus 204. Furthermore, an input/output interface 205 is connected to the bus 204. An input unit 206, an output unit 207, a storage unit 208, a communication unit 209, and a drive 210 are connected to the input/output interface 205.

The input unit 206 includes a keyboard, a mouse, a microphone, and the like. The output unit 207 includes a display, a speaker, and the like. The storage unit 208 includes a hard disk, a nonvolatile memory, and the like. A communication unit 209 includes a network interface and the like. The drive 210 drives a removable medium 211, such as a magnetic disk, an optical disc, a magneto-optical disc, or a semiconductor memory.

In the computer having the above-described configuration, the following series of processes are performed when the CPU 201 loads a program stored in the storage unit 208 to the RAM 203 via the input/output interface 205 and the bus 204 and executes it.

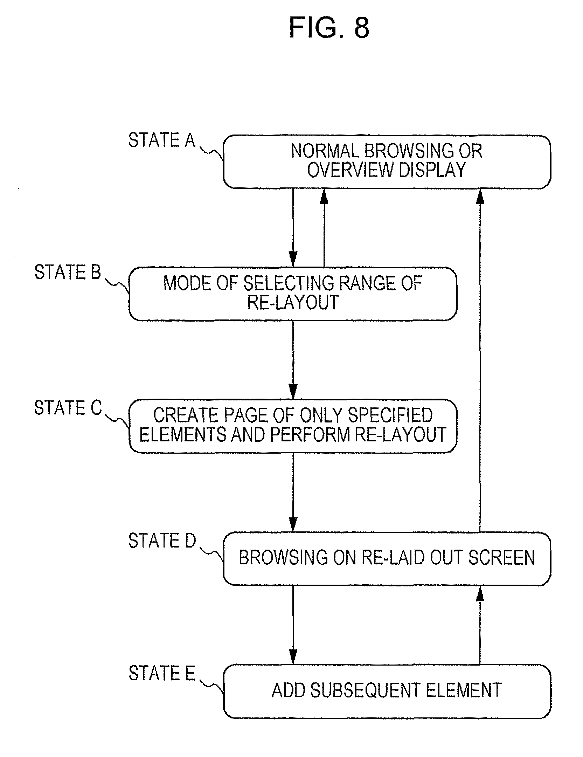

Next, basic state transition of the terminal 200 will be described with reference to Fig. 8. State A is a state where normal browsing is being performed or a state where overview display is being performed. In state A, if an instruction to perform enlargement is provided from a user, here, if a gesture for providing an instruction to perform re-layout is performed, the state changes to state B. State B is a mode of selecting a range of re-layout. In this mode, a user performs a certain gesture to notify the terminal 200 of the range of re-layout, for example, the range on which an enlargement process is to be performed.

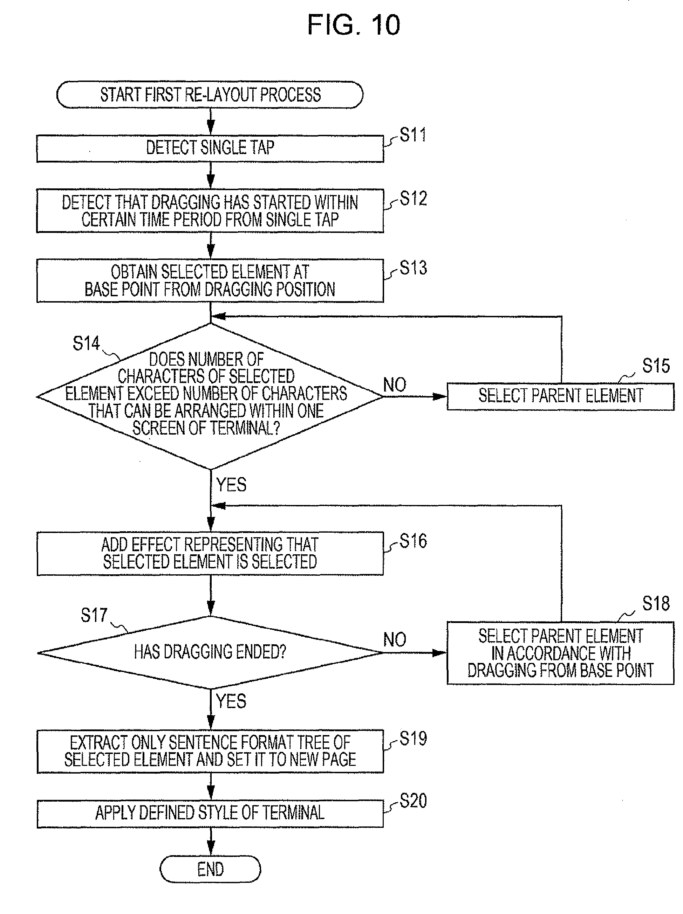

If canceling is performed in state B, the state changes to state A. If a range is selected by a user in state B, the state changes to state C. State C is a state where a page of only specified elements is created and re-layout is performed. The selection of a range and re-layout will be described below with reference to the flowcharts illustrated in Figs. 10 to 14.

After re-layout is performed and a page is created in state C, the state changes to state D, and browsing is performed on a screen obtained through the re-layout. If the user provides an instruction to scroll in state D, the state changes to state E. In state E, for example, an element indicated by the scrolling, that is, an element continued from the element that was displayed at the time, is added and displayed.

If scrolling stops in state E, the state changes to state D. Also, if a gesture for going back to the initial display is performed or a new page is loaded in state D, the state changes to state A.

### Processes relating to enlargement process

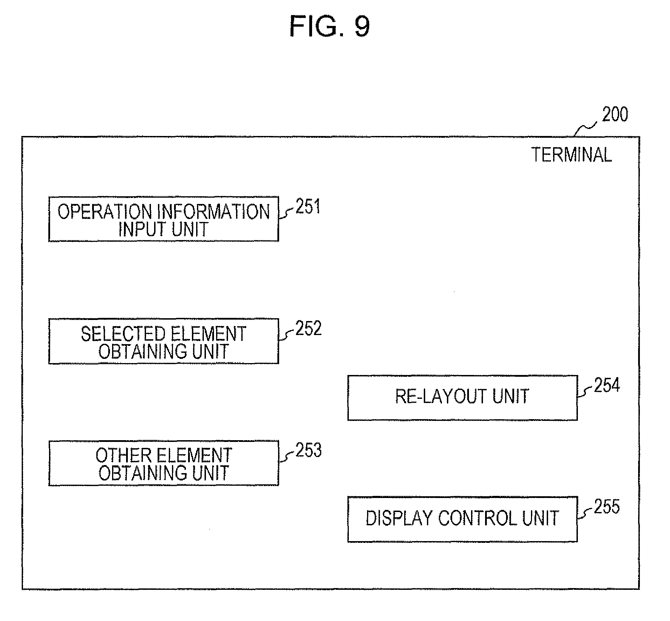

Next, processes relating to re-layout (enlargement process) will be described. First, the functions of the terminal that executes the processes relating to re-layout will be described with reference to Fig. 9. The terminal 200 illustrated in Fig. 9 has a functional configuration including an operation information input unit 251, a selected element obtaining unit 252, an other element obtaining unit 253, a re-layout unit 254, and a display control unit 255.

The operation information input unit 251 obtains information representing an operation when an operation member, such as a mouse, a touch panel, or a keyboard, is operated. If the operation information input by the operation information input unit 251 represents an operation of providing an instruction to perform re-layout, the selected element obtaining unit 252 obtains an element (Fig. 6) that is to be re-laid out. Also, the other element obtaining unit 253 obtains an element that is different from the element obtained by the selected element obtaining unit 252 and that is necessary for re-layout.

The re-layout unit 254 constructs a layout suitable for the terminal by using the elements obtained by the selected element obtaining unit 252 and the other element obtaining unit 253. Then, the display control unit 255 performs display that is based on the constructed layout.

### First re-layout process

A process performed by the terminal 200 having the above-described functions will be described with reference to the flowchart illustrated in Fig. 10. The process that is to be described with reference to the flowchart illustrated in Fig. 10 is a process for laying out sentences so that the user can easily read them even on a screen that has a relatively small display area, for example, a process for displaying the screen illustrated in Fig. 3. Here, the process based on the flowchart illustrated in Fig. 10 is referred to as a first re-layout process.

The first re-layout process produces a greater effect when being executed in a terminal having a relatively small screen on which the entire content is not viewed. Also, this process is used for an application of clearly displaying detailed information rather than an overview.

In step S11, information input by the operation information input unit 251, i.e., a single tap, is detected (that is, a first user input is detected). In step S12, it is judged on the basis of the information from the operation information input unit 251 that dragging has started within a certain time period from the single tap and then, the process proceeds to step S13. Dragging means continuation of a touched state and change of a first contact position, that is, the tapped position (touched position).

In the first re-layout process, the user provides an instruction to perform re-layout by performing a double tap. Also, the user specifies the range (elements) where re-layout is to be performed by performing dragging (that is, a movement of a first contact position) instead of the second tap of the double tap (that is, a second user input). The user specifies the range where re-layout is to be performed by moving his/her finger while touching the screen with the finger.

With such specification, after it is detected in step S11 that a single tap has been performed, it is detected in step S12 that a touch has been performed within a certain time period from the single tap and that a state where the touched state is maintained, i.e., a dragging state, has started (that is, it is determined that the movement of the first contact position occurs within a threshold time period of a first contact time). Then, the process proceeds to step S13.

In step S13, a selected element at a base point (that is, a second contact position) is obtained from a dragging position. That is, the selected element obtaining unit 252 judges the element of content displayed at the dragging position and obtains the element. For example, in the tree structure illustrated in Fig. 6, if the position where "first paragraph" is displayed is tapped in a state where "text" based on the element 114 is displayed, the element 115 is obtained by the selected element obtaining unit 252.

In step S14, it is judged whether or not the number of characters of the obtained element selected by the user exceeds the number of characters that can be arranged within one screen of the terminal (that is, a threshold value associated with the display area). The re-layout unit 254 stores in advance the size of the display area (information about the number of characters that can be displayed in one line and the size) of the display unit (display 11 or display 51) of the terminal 200. On the basis of the information, it is judged whether or not the number of characters of the element obtained by the selected element obtaining unit 252 exceeds the number of characters that can be arranged within one screen.

If it is judged in step S14 that the number of characters of the obtained element does not exceed the number of characters that can be arranged within one screen, in other words, if it is judged that a blank will be displayed on the screen if only the obtained element is displayed, the process proceeds to step S15. In step S15, the re-layout unit 254 instructs the other element obtaining unit 253 to select and obtain an additional element, e.g., a parent element. In this way, another element is obtained, and then the process returns to step S14, and step S14 is performed again.

Here, if a parent element is selected to obtain another element, acquisition in units of articles can be performed as in the element 114 illustrated in Fig. 6. Here, a description will be given under the assumption that a parent element is selected and obtained. Alternatively, a brother element may be selected and obtained. Furthermore, in a case where a brother element is selected and where the judgment "YES" is not obtained in step S14 after the selection, a parent element may be selected and obtained.

For example, assume a case where a plurality of elements form a single article. In this case, when a parent element is obtained, a process is performed in the unit of a single article. When a brother element is obtained, a process is performed in part of the article, that is, in some large portion of the article.

Also, in a case where adjacent brother elements are sequentially obtained before a parent element, a selected range suitable for the screen size can be extracted even when the parent element is too large. Also, in a case where a meaning such as a headline is given to the elements, the elements having meanings similar to each other are defined in advance, and the brother element having the similar meaning is preferentially added when any of brother elements is to be added, so that a set of elements having similar meanings can be obtained. Furthermore, the number of characters in the brother elements is counted, so that a selection range that is more suitable for the screen size can be extracted.

The re-layout unit 254 judges whether or not the number of characters of the elements (that is, a sum of the number of characters of the elements) obtained by the selected element obtaining unit 252 and the other element obtaining unit 253 that are to be displayed on one screen exceeds the number of characters that can be arranged within one screen. As a result, if it is judged that the number of characters does not exceed the number of characters that can be arranged within one screen, the process proceeds to step S15 again. In this way, steps S14 and S15 are repeated, so that the acquisition of an element is repeatedly performed until the number of characters of the elements exceeds the number of characters that can be arranged within one screen. Accordingly, it can be prevented that a blank is displayed on the screen provided to the user, and effective display can be performed without causing the existence of an unused area.

Also, with the repetition of such a process, a range can be automatically set even if the range is not set in response to an instruction from the user.

On the other hand, if it is judged in step S14 that the number of characters of the obtained element exceeds the number of characters that can be arranged within one screen of the terminal 200, the process proceeds to step S16. In step S16, an effect representing that the selected element is selected is added. The re-layout unit 254 instructs the display control unit 255 to perform display so that the user can recognize the element selected at the time. The display control unit 255 executes a process in response to the instruction, so that an effect is added.

The process for an effect executed in step S16 and the process for an effect executed in the second to fifth re-layout processes described below are the following process, for example. That is, when characters are selected, the characters are displayed in a color different from the color of the other characters. The same effect as the effect of such selection of characters is added. Alternatively, an effect of surrounding selected characters may also be used.

If the terminal has a relatively large screen or a plurality of screens, a result of a selected layout may be constantly displayed in part of the screen or another screen. For example, if the terminal has two screens, selection may be performed using the upper screen, and the screen after re-layout (the screen obtained by executing the following process) may be displayed on the lower screen.

In step S17, it is judged whether or not dragging has ended. If it is judged that dragging has not ended, the process proceeds to step S18, where a process of selecting a parent element in accordance with the movement of dragging from the base point is executed. Then, the process returns to step S16, where an effect reflecting the process in step S18 is added. That is, an effect is added from the position where the user started dragging with his/her finger to the position touched by the user at the time.

On the other hand, in step S19, a process of extracting only the sentence format tree of the selection element and setting it to a new page is executed. That is, the element added with an effect at the time is extracted and set to a new page. For example, if the element 116 in Fig. 6 is selected, the elements 115, 116, and 117 are extracted as a sentence format tree, and a new page formed of these elements is set. Then, in step S20, a defined style of the terminal 200 (that is, a formatting structure associated with terminal 200) is applied to the set new page. The re-layout unit 254 applies a predefined style to the set new page.

Display based on the created page is performed by the display control unit 255, and the page is regarded as a page to which the style suitable for the terminal is applied, so that the page that can be easily read can be provided to the user.

Note that the style applied to the new page in step S20 and the style applied to the new page in the second to fifth re-layout processes described below are the following styles, for example.

That is, a style specifying a font size and width for easy reading unique to the terminal 200, a style of changing a character size in accordance with the number of characters of a selected element, and a style of overwriting a character size and a block width while maintaining the original style of font, color, underline, highlight, and the like. Alternatively, a preset style that is set for site information, e.g., for each URL of a browser, may be used, or a preset style may be used in accordance with the symbol of a selected element or the parent element thereof. Furthermore, in a terminal having a plurality of screens, a style in which an element does not overlap the boundary between the screens may be specified.

One or a plurality of styles among the foregoing styles are preset in the re-layout unit 254, and any of the preset styles is appropriately applied, so that a process of applying a style to a new page is performed.

### Second re-layout process

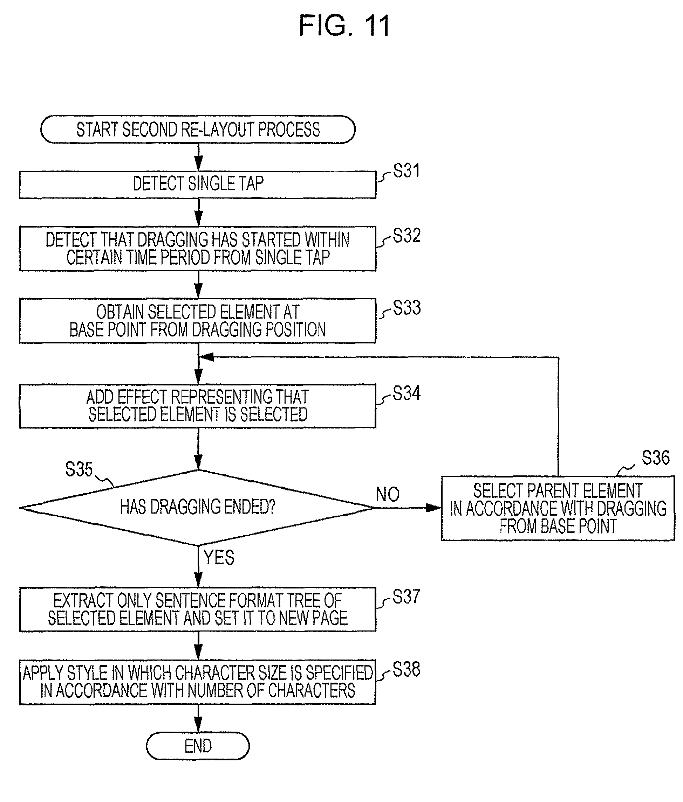

Next, the second re-layout process will be described with reference to the flowchart illustrated in Fig. 11. The second re-layout process is more effective when it is applied to a terminal having a small screen that cause difficulty in reading, and is preferably used for the application of displaying a range specified by a user in a large size on the entire screen. In the second re-layout process, re-layout is performed by increasing the size of characters so that the range specified by the user is displayed on the entire screen.

When the user wants to provide an instruction to perform re-layout, the user performs dragging instead of the second tap of a double tap, thereby specifying the range applied to an enlargement process, as in the above-described first re-layout process. Since the specification method is the same, the second re-layout process includes the same process as that in the first re-layout process. That is, the process from step S31 to step S33 is the same as the process from step S11 to step S13, in which a single tap performed by the user is detected, and, if dragging starts within a certain time period from the detected single tap, the element at the dragging position is obtained.

The process from step S34 to step S37 is the same as the process from step S16 to step S19. In the second re-layout process, the process corresponding to steps S14 and S15 in the first re-layout process is not performed. Thus, a process of automatically setting a range is not performed if dragging is not performed, so that only the range (element) specified by the user is enlarged and displayed on the screen.

In the process from step S34 to step S37, the range from the position where dragging is started by the user to the position where the dragging continues is displayed with an effect, the sentence format tree of a selected element is extracted when it is judged that the dragging has ended, that is, the range has been specified, and the sentence format tree is set to a new page.

After the range of re-layout has been specified by the user in this manner, the process in step S38 is performed on the new page, which is the specified range. That is, in step S38, the re-layout unit 254 applies a style in which a character size is specified in accordance with the number of characters in the new page to the new page.

With the character size being applied in accordance with the number of characters, display is performed so that the characters in the range specified by the user are arranged within one screen in as large size as possible. Accordingly, the user can browse certain content while easily reading it without performing an operation such as scrolling.

### Third re-layout process

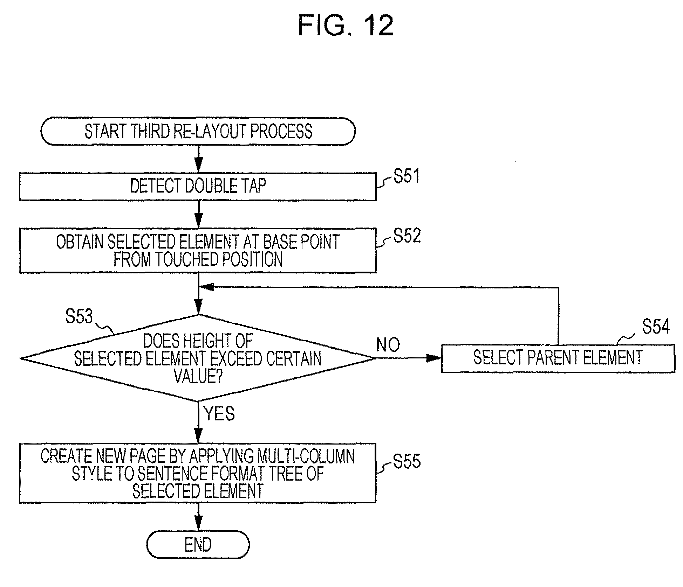

Next, the third re-layout process will be described with reference to the flowchart illustrated in Fig. 12. The third re-layout process is more effective when it is applied to a terminal having a relatively large screen, and is preferably used for the application of increasing the amount of information that can be seen at one time by displaying content having a limited width in a multi-column style on the wide screen. In the third re-layout process, an element including the range (element) specified by the user and having a certain height or more (that is, a threshold height) is selected, and a multi-column style (that is, a multi-column formatting structure) is applied thereto. The third re-layout process is a process performed to switch the screen illustrated in Fig. 4 to the screen illustrated in Fig. 5.

A double tap is detected in step S51, and then a selected element is obtained with the double-tapped position (the position touched at the time) being a base point in step S52. In step S53, it is judged whether or not the height of the selected element exceeds a certain value. If it is judged in step S53 that the height of the selected element does not exceed the certain value, the process proceeds to step S54, where a parent element is selected and is added as a selected element. Then, the process in step S53 is performed again with the added element being included.

"Certain value" of "whether the height of the selected element exceeds a certain value" in step S53 represents the height that is necessary for applying a multi-column style of content. If the height of content is equal to or smaller than the height of a display area, it is not necessary to apply a multi-column style and to add another element as a selected element. That is, at least the value of the height of the display area or larger is set as the "certain value".

The process in steps S53 and S54 is repeated, whereby a parent element is added to the selected element until it is judged that the height of the selected element exceeds the certain value. At the time when the height exceeds the certain value, the process proceeds to step S55. In step S55, a process of extracting only the sentence format tree of the selected element and setting it to a new page is performed. Then, the multi-column style combined with the original style is applied to the set new page, so that a screen that is to be actually presented to the user is created.

In this case, the original style is used, and thus the style itself, for example, the size of characters is not changed. However, since the multi-column style is also used, display is performed by effectively using one screen. For example, on the screen illustrated in Fig. 4, the areas 62-1 and 62-2 are regarded as unused areas. By applying the multi-column style to these areas, the screen illustrated in Fig. 5 can be provided to the user, and unused areas can be eliminated for effective use. In the example illustrated in Fig. 5, the number of columns is three, but the number of columns may be determined in accordance with the ratio between the width of the display area of the terminal and the width of content.

Also, in the style illustrated in Fig. 5, in which sentences are displayed in a multi-column style on one screen, the user can browse a large amount of information without performing scrolling.

### Fourth re-layout process

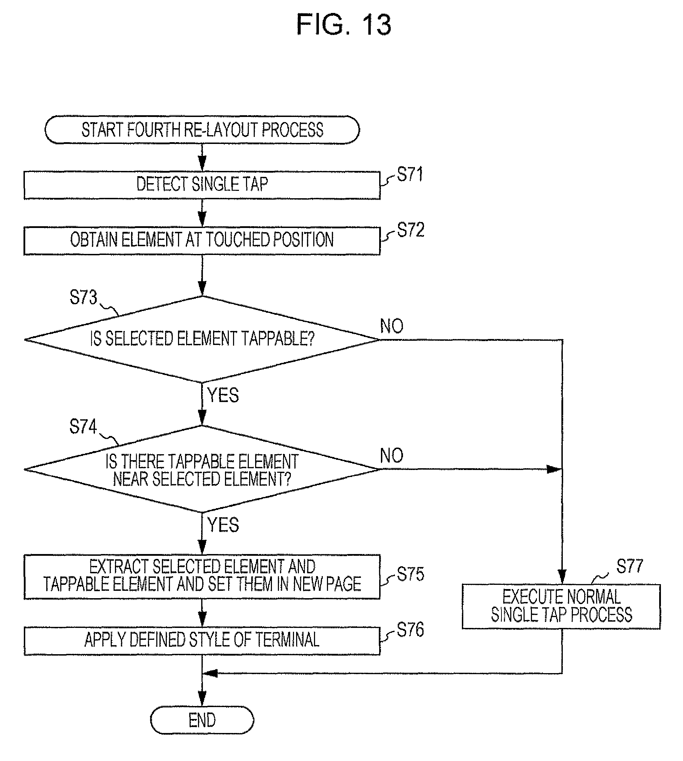

Next, the fourth re-layout process will be described with reference to the flowchart illustrated in Fig. 13. The fourth re-layout process is more effective when it is applied to a terminal having a relatively small screen and is preferably used for the application of changing a layout to prevent a wrong press when a wrong press is likely to occur. In the fourth re-layout process, the style is changed when there are a plurality of tappable elements near a single-tapped position, and re-layout is executed.

When a tappable element is taped, display is changed to the linked content. For example, a plurality of tappable elements are displayed in the area 22 in Fig. 1, but these tappable elements are displayed in a small size when the screen is small. Thus, the user has difficulty in correctly selecting (tapping) a desired element and may perform wrong tapping.

Thus, when such a plurality of tappable elements are displayed and when a single tap is performed on an area where the plurality of tappable elements are displayed, the area is enlarged to change the display so that the user can easily select a desired element. Hereinafter, a process for performing display in such a manner, that is, the fourth re-layout process, will be described with reference to the flowchart illustrated in Fig. 13.

A single tap is detected in step S71, and then the element at the touched position is obtained in step S72. In step S73, it is judged whether or not the obtained element (selected element) is a tappable element. If it is judged in step S73 that the selected element is tappable, the process proceeds to step S74.

In step S74, it is judged whether or not there is a tappable element near the selected element (that is, proximate to the selected element). If it is judged in step S74 that there is a tappable element near the selected element, the process proceeds to step S75. In step S75, the selected element and a tappable element near the selected element are extracted, and they are set to a new page. In step S76, a defined style of the terminal is applied to the new page that has been set in this manner.

In this way, when an area having a plurality of tappable elements is operated, the plurality of tappable elements are displayed in as large size as possible by applying the defined style of the terminal. In other words, the tappable elements are displayed in such a size that at least the user can easily view them and does not perform wrong selection. Accordingly, the user can reliably select a desired element from among the enlarged tappable elements.

On the other hand, if it is judged in step S73 that the selected element is not tappable, or if it is judged in step S74 that there is no tappable element near the selected element, the process proceeds to step S77. In step 577, a normal single tap process is performed. As the normal single tap process, the process in step S31 in the flowchart illustrated in Fig. 11 may be performed, for example.

In this case, if the user selects an area where a plurality of tappable elements are displayed, the tappable elements can be enlarged. If the user selects an area where such a plurality of tappable elements are not displayed, the content displayed in the area can be enlarged.

### Fifth re-layout process

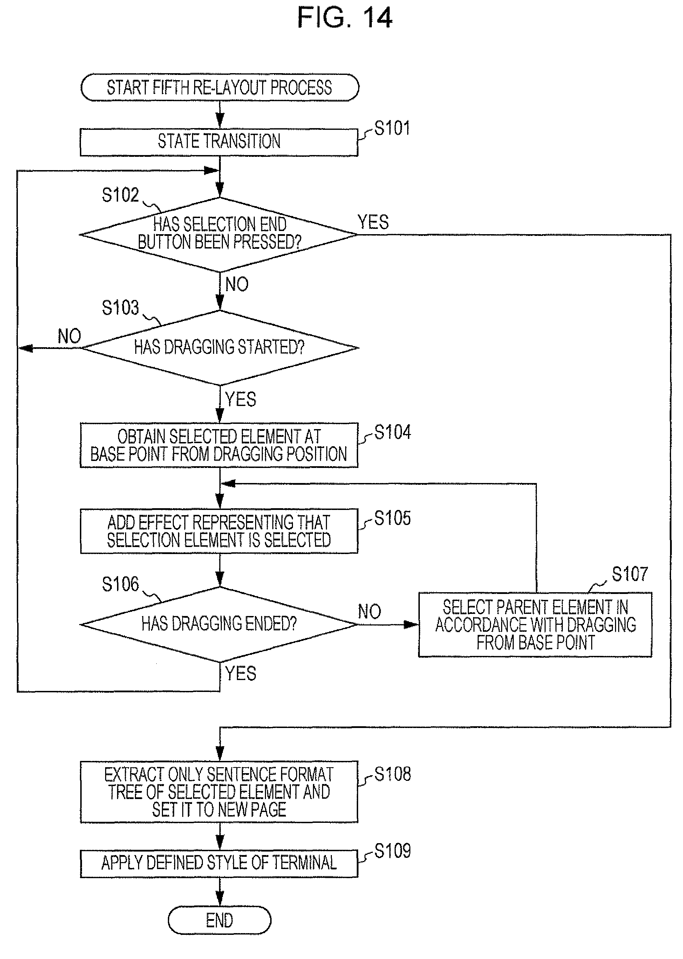

Next, the fifth re-layout process will be described with reference to the flowchart illustrated in Fig. 14. The fifth re-layout process is more effective when it is applied to a terminal having a relatively small screen, and is preferably used for the application in which a user selects only some interesting articles

(applications) and reads them in a layout suitable for the terminal. The selection may be performed using a single tap, dragging, and the like. The fifth re-layout process is performed when re-layout is selected from items in a menu, for example. Alternatively, the fifth re-layout process may be performed when a dedicated button is pressed or when a predetermined gesture is input.

In step S101, a menu is displayed in response to an instruction provided from a user, the user specifies the item representing re-layout among a plurality of items in the displayed menu, the specification is recognized, and the state changes. After the state has changed, it is judged in step S102 whether or not a selection end button has been pressed. The selection end button is a button that is operated after the user has selected a desired element.

If it is judged in step S102 that the selection end button has not been pressed, the process proceeds to step S103. In step S103, it is judged whether or not dragging has started. If it is judged in step S103 that dragging has not started, the process returns to step S102, and it is judged whether or not the selection end button has been operated. In this way, after dragging has started or after the selection end button has been operated, the process proceeds to the next step.

If it is judged in step S103 that dragging has started, the process proceeds to step S104. In step S104, the selection element at the base point is obtained from the drugging position. That is, the selected element obtaining unit 252 judges the element of content displayed at the dragging position and obtains the element.

In step S105, an effect representing that the selected element is selected is added. The re-layout unit 254 provides an instruction to the display control unit 255 so that the user can recognize the element selected at the time on the display, and the display control unit 255 performs a process in response to the instruction, so that an effect is added.

In step S106, it is judged whether or not dragging has ended. If it is judged that dragging has not ended, the process proceeds to step S107, where a process of selecting a parent element in accordance with the movement of dragging from the base point is executed. Then, the process returns to step S105, and an effect reflecting the process in step S105 is added. That is, display is performed with an effect being added from the position where the user starts dragging with his/her finger to the position touched by the user at the time.

In this way, the user can provide an instruction to perform a process of re-layout of a desired range by performing a single dragging operation. Also, by performing such a dragging operation a plurality of times, the user can provide an instruction to perform a process of re-layout with respect to a plurality of ranges (articles or the like). That is, if it is judged in step S106 that dragging has ended, the process returns to step S102 and the subsequent process is repeated, so that a plurality of articles are selected.

On the other hand, if it is judged in step S102 that the selection end button has been operated, the process proceeds to step S108. In step S108, a process of extracting only the sentence format tree of the selected element and setting it to a new page is executed. In step S109, a process of applying a defined style of the terminal to the set new page is executed.

With this process, the plurality of elements selected by the user, for example, articles, are displayed in a style suitable for the terminal. With this display, the user can browse the plurality of selected elements in an easy read manner.

As described above, in the first to fifth re-layout processes, display on the screen having a display area of a certain size is controlled, and display of content made up of a plurality of elements is controlled. If an instruction to perform re-layout of the controlled content is provided by the user, the element at the position where the instruction is provided, for example, the element at the position touched by the user, is obtained, and a new page made up of the element is set. Then, a defined style is applied to the set new page, and the page to which the style has been applied is provided to the user.

Also, in order to prevent a provided page from having a blank, in the first to fifth re-layout processes except the fourth re-layout process, a new page is set using a plurality of elements including the element specified by the user. The plurality of elements are obtained by adding elements until the number of characters of the element specified by the user and the number of characters of the other elements exceed the number of characters that can be arranged within one screen.

Furthermore, in the second re-layout process, a process for making a new page a page in which only the element selected by the user is displayed is executed, and thus an exemplary embodiment can be applied to the case of performing re-layout on only the range desired by the user.

Furthermore, in the fourth re-layout process, if an obtained element is a tappable element, a process of obtaining another tappable element near the tappable element and setting a page made up of the obtained tappable elements as a new page is executed. Thus, it can be prevented that the user performs wrong tapping when a plurality of tappable elements are displayed at high density.

In the above-described embodiment, a description has been given of a case where an instruction of re-layout is provided by performing a double tap. In the double tap, if the state after the second tap is held, selection is started and a range is specified. In other words, if dragging is performed instead of the second tap, a range is specified and the element in the specified range is obtained. With this process, a double tap itself (a double tap in which the second tap is not held for a long time, or a double tap in which dragging is not performed instead of the second tap) can be assigned to a process other than a process of providing an instruction of re-layout.

Alternatively, an operation other than a double tap may be used for providing an instruction of re-layout. For example, the instruction may be provided by using a gesture of a single tap, triple tap, or multi-touch, or by using a pressure or a touched area. In that case, the number of operations can be reduced by allowing a user to separately perform a selection operation and a range specification.

Furthermore, an instruction of re-layout may be provided by performing a long press (holding a single tap for a long time). Also, an instruction of re-layout may be provided by performing any of the foregoing operations, for example, a single tap, while any key among hardware (HW) keys being operated.

Also, as in the fifth re-layout process, a menu may be displayed, an item for providing an instruction of re-layout may be prepared as an item in the displayed menu, and the item may be selected to provide an instruction of re-layout. In such a configuration, an element selected using a certain operation, such as touch, is obtained after the item has been selected from the menu, and a re-layout process is performed.

With the execution of the foregoing re-layout process, a screen obtained through the re-layout is provided to the user. When the user executes a process, such as scrolling, on the provided screen, the process corresponding to the scrolling is executed. That is, if scrolling is performed in the foregoing state D illustrated in Fig. 8, the state changes to state E, in which a subsequent element is added.

The process executed in state E is a process of adding a brother element of a selected element and re-displaying the elements. If all the brother elements have already been added, a parent element is also added, and re-display is executed. With this configuration, scrolling can be performed on the screen after re-layout.

The addition of a brother element or parent element continues until the height of all the elements exceeds a defined value. Alternatively, addition of an element may be performed in parallel with a user operation even if scroll out is not performed.

### Advantages

The following advantages can be expected by performing the above-described re-layout. The sentence format can be changed from the position where the user has difficulty in reading content, so that content is displayed in an appropriate size and width. This enables the user to read through sentences by simply performing unidirectional scrolling.

If the user feels that the operation is heavy in a terminal having a low processing performance, the above-described process may be applied to simplify the sentence format and reduce the amount of processing, thereby reducing the burden of the operation. By overwriting the existing operation, the possibility of wrong operations that may occur in the existing operation can be detected, and the sentence format and display can be changed to suppress wrong operations.

Defining in advance a change procedure for a specific sentence format allows change to display that is more suitable for the terminal. After a target portion is temporarily changed and browsed, the original state can be recovered.

### Recording medium

The above-described series of processes can be executed by hardware and can be executed by software. In the case of executing the series of processes by software, the program forming the software is installed into a computer. Here, the computer includes a computer incorporated into dedicated hardware, a general-purpose personal computer capable of executing various functions by being installed with various programs, and the like.

For example, the program executed by the CPU 201 of the terminal 200 illustrated in Fig. 7 can be provided by being recorded on the removable medium 211 serving as a package medium or the like. Also, the program can be provided via a wired or wireless transmission medium, such as a local area network, the Internet, or digital satellite broadcasting.

In the computer, the program can be installed into the storage unit 208 via the input/output interface 205 by loading the removable medium 211 onto the drive 210. Also, the program can be received by the communication unit 209 via a wired or wireless transmission medium and installed into the storage unit 208. Alternatively, the program can be preinstalled into the ROM 202 or the storage unit 208.

The program executed by the computer may be a program in which processes are performed in time series in accordance with the order described in this specification, or a program in which processes are performed at necessary timing, for example, when call is performed.

In this specification, a system means an entire apparatus including a plurality of apparatuses.

The present application contains subject matter related to that disclosed in Japanese Priority Patent Application JP 2010-142461 filed in the Japan Patent Office on June 23, 2010.

It should be understood by those skilled in the art that various modifications, combinations, sub-combinations and alterations may occur depending on design requirements and other factors insofar as they are within the scope of the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.
1. A computer-implemented method for formatting electronic content, comprising:
   generating a signal for displaying content to a user on a display screen, the displayed content being associated with an electronic file comprising a plurality of content elements;
   receiving information associated with a selection by the user of the displayed content;
   identifying, using a processor, a content element corresponding to the displayed content selection, based on at least the received information;
   formatting the identified content element by applying a formatting structure to the identified content element; and
   generating a signal for displaying the formatted content element on the display screen.
2. A non-transitory, computer-readable storage medium storing a program that, when executed by a processor, causes the processor to perform a method for formatting electronic content, comprising:
   generating a signal for displaying content to a user on a display screen, the displayed content being associated
   with an electronic file comprising a plurality of content elements;
   receiving information associated with a selection by the user of the displayed content;
   identifying a content element corresponding to the displayed content selection, based on at least the received information;
   formatting the identified content element by applying a formatting structure to the identified content element; and
   generating a signal for displaying the formatted content element on the display screen.

## Claims

1. An information processing apparatus, comprising:
a generation unit configured to generate a signal for displaying content to a user on a display screen, the displayed content being associated with an electronic file comprising a plurality of content elements;
a receiving unit configured to receive information associated with a selection by the user of the displayed content;
an identification unit configured to identify a content element corresponding to the displayed content selection, based on at least the received information; and
a formatting unit configured to format the identified content element by applying a formatting structure to the identified content element,
wherein the generation unit is further configured to generate a signal for displaying the formatted content element on the display screen.

2. The apparatus of claim 1, further comprising:
an input unit configured to detect a first user input.

3. The apparatus of claim 2, wherein the first user input comprises a contact between an operational tool of the user and a surface of the input unit.

4. The apparatus of claim 3, wherein the receiving unit is further configured to:
receive, from the input unit, a first signal indicative of the first user input.

5. The apparatus of claim 4, wherein the identifying unit is configured to:
identify a first contact position and a first contact time associated with the first user input, based on at least the first signal.

6. The apparatus of claim 5, wherein the identifying unit is further configured to:
detect a movement of the first contact position; and
identify a second contact position associated with the detected movement.

7. The apparatus of claim 6, wherein the identifying unit is further configured to:
determine whether the detected movement is detected within a threshold time period of the first contact time.

8. The apparatus of claim 7, wherein the identifying unit is further configured to:
identify the content element based on the second contact position, when the movement is detected within the threshold time period.

9. The apparatus of claim 8, wherein the identifying unit is further configured to:
identify a number of characters within the identified content element; and
determine whether the identified number of characters exceeds a threshold value associated with the display screen, the threshold value comprising a number of characters that are displayed to a user within the display screen.

10. The apparatus of claim 9, wherein the identifying unit is further configured to:
obtain at least one additional content element associated with the identified content element, when the number of characters within the identified content element fails to exceed the threshold value.

11. The apparatus of claim 10, wherein the identifying unit is further configured to:
compute a sum of a number of characters within the at least one additional content element and the number of characters within the identified content element; and
determine whether the sum exceeds the threshold value.

12. The apparatus of claim 6, wherein the input device is further configured to detect a second user input, and the receiving unit maybe further configured to:
receive, from the input unit, a second signal indicative of the second user input;
the identification unit maybe further configured to:
determine that the detected movement has ceased, based on at least the second signal; and the formatting unit maybe further configured to:
apply the formatting structure to the identified content element, when the detected movement has ceased.

13. The apparatus of claim 12, wherein, when the formatting structure is applied to the identified content element the formatting structure comprises either a formatting structure associated with the display screen, or a character size, the character size being based on a number of characters within the identified content element.

14. The apparatus of claim 14, wherein when the formatting structure is applied in the identified contact element, the formatting unit is further configured to:
determine whether a height of the identified content element exceeds a threshold height associated with the display screen; and
apply a multi-column formatting structure to the identified content element, when the height of the identified element exceeds the threshold height.

15. The apparatus of claim 1, wherein:
the identifying unit is further configured to:
determine whether the identified content element comprises a tappable element; and
select an additional tappable element disposed in a position within the electronic file within a predetermined distance from the identified content element, when the identified content element is a tappable element; and
the formatting unit is further configured to:
apply the formatting structure to at least a portion of the identified content element and the additional tappable element.
